# EUROPEAN PATENT SPECIFICATION

(11) **EP 1 945 868 B1**
(45) Date of publication and mention of the grant of the patent: **14.02.2018**
(21) Application number: 06809739.3
(22) Date of filing: 07.11.2006
(51) Int. Cl.: E03F 5/10, F16K 31/30, F16K 31/46

(54) **A COUPLING DEVICE FOR COUPLING A VALVE TO AN OUTLET FROM A CHAMBER**
KOPPLUNGSVORRICHTUNG ZUR KOPPLUNG EINES VENTILS AN EINEM AUSLASS AUS EINER KAMMER
DISPOSITIF D ACCOUPLEMENT POUR ACCOUPLER UNE VANNE À LA SORTIE D UNE CHAMBRE

(30) Priority: 07.11.2005 IE 20050739
(43) Date of publication of application: 23.07.2008
(73) Proprietor: Concannon, Colm Vincent, Galway (IE); Concannon, John Francis, Tuam Galway (IE)
(72) Inventor: O'BRIEN, Dermot, Martin, County Galway (IE); CONCANNON, Colm Vincent, County Galway (IE); CONCANNON, John Francis, County Galway (IE)
(74) Representative: Gorman, Francis Fergus
(86) International application number: PCT/IE2006/000127
(87) International publication number: WO 2007/052243

(56) References cited:
- EP-A1- 0 312 271
- WO-A-97/21004

## Description

The present invention relates to a coupling device for coupling a valve to an outlet from a chamber, and in particular, though not limited to a coupling device for coupling a vortex valve to an outlet from a discharge chamber of a storm water management system. The invention also relates to a combination of the coupling device and a valve, and the invention further relates to a chamber comprising the valve and the coupling device, and to a storm water management system.

Storm water management systems require that the rate at which storm water resulting from storm water surges is released into rivers and streams should be controlled in order to avoid excessive flooding of the rivers and/or streams into which the storm water from the storm water management system is being released. In general, storm water is collected in relatively large underground tanks, and the collected storm water therein is released gradually into an underground soak pit. Storm water not absorbed by the soak pit is fed to a discharge chamber from which the storm water is released at a controlled rate into the river or stream. A control valve, which commonly is provided by a vortex valve, is located in the discharge chamber for controlling the rate at which storm water is released from the discharge chamber into the river or stream. In general, such storm water management systems are capable of controlling the release of storm water resulting from the majority of storm water surges. However, periodically, perhaps once in five or ten years, as a result of an exceptionally severe storm a storm water surge is experienced which exceeds the design limits of such a storm water system. In such exceptional cases, it is essential that the underground tanks and discharge chamber should not overflow, since in general such storm water management systems are located relatively closely to the area from which the storm water is collected. Such areas, typically, are housing estates, and if the storm water management system were to overflow during exceptional storm water surge, the housing estate from which the water is being collected could itself be flooded.

To overcome these problems, various outlet systems are provided for managing overflow of such storm water systems in the event of exceptional storm water surges. One such overflow system comprises a vortex valve for controlling the flow of storm water from the discharge chamber. The vortex valve is provided with two inlets, one inlet being provided to the vortex chamber which in turn delivers the water through the vortex chamber to an outlet from the valve with a controlling vortex action, and the other inlet being provided by a straight through pipe to the outlet of the valve, so that the storm water can pass through the vortex valve without being subjected to the vortex action. This arrangement, however, requires that the inlet to the straight through pipe should be closed by a closure plate, which is operable manually for opening the inlet to the straight through pipe of the vortex valve. This is unsatisfactory, since both the inlets feed to a common outlet, and storm water flowing through the vortex chamber can still induce a vortex action in the water flowing through the outlet, even when the outlet to the straight through pipe is open and storm water is flowing directly to the outlet of the vortex valve. This, thus, imposes a limit on the rate at which overflow water can be released from the discharge chamber, and in an exceptional storm water surge can lead to overflow of water from the discharge chamber and the holding tanks, and in turn to flooding of the area from which the storm water is collected. This is unsatisfactory, and there is therefore a need for a device which addresses this problem.

PCT Specification No. WO 97/21004 of Johannessen discloses a coupling device according to the preamble of claim 1. This document discloses in particular a chamber with a vortex valve located in the chamber and connected to an outlet from a chamber through an outlet pipe. A stand pipe extends upwardly from the outlet pipe which allows water which rises above the level of the stand pipe, to pass through the stand pipe in order to bypass the vortex valve.

European Patent Specification No. 0,312,271 of Lakatos discloses a chamber with a vortex valve located in the chamber and connected to an outlet from a chamber. A central opening is located in the vortex valve which allows water to pass through the vortex valve without passing through the vortex portion of the vortex valve. The central opening is closed by a closure, which can be operated by a cord.

The present invention is directed towards providing a coupling device for coupling a valve to an outlet of a discharge chamber which addresses the problem of known storm water management systems, and the invention is also directed towards providing such a coupling device for coupling a valve to an outlet from any type of chamber from which a liquid is to be discharged. The invention is also directed towards providing a combination of a valve and the coupling device, and the invention is additionally directed towards providing a chamber comprising a valve and the coupling device. The invention is further directed towards a storm water management system.

According to the invention there is provided a coupling device according to claim 1. In particular, the coupling device is meant for coupling a valve to an outlet from a chamber with the valve located in the chamber, the coupling device comprising a housing, a main communicating duct extending through the housing for communicating the valve with the outlet from the chamber, the main communicating duct extending between an upstream inlet adapted for communicating with an outlet of the valve, and a downstream outlet adapted for communicating with the outlet from the chamber, and at least one bypass means located in the housing communicating the main communicating duct with the chamber bypassing the valve, wherein the housing is formed by an outer wall defining the outer surface of the housing and defining a hollow interior region, the outer wall of the housing comprising a valve abutting wall for abutting the valve, a chamber abutting wall for abutting the wall of the chamber adjacent the outlet therefrom, and a side wall extending between the valve abutting wall and the chamber abutting wall, the upstream inlet is located in the valve abutting wall, the downstream outlet is located in the chamber abutting wall, a bypass inlet is located in the side wall, the main communicating duct extends through the hollow interior region between the upstream inlet and the downstream outlet thereof, and the bypass means comprises a bypass duct extending through the hollow interior region from the bypass inlet to the main communicating duct at a location intermediate the upstream inlet and the downstream outlet thereof.

Preferably, each bypass means comprises a bypass inlet, the bypass inlet being located in an outer surface of the housing intermediate the upstream inlet and the downstream outlet of the main communicating duct. Advantageously, each bypass inlet is spaced apart from the upstream inlet and the downstream outlet of the main communicating duct. Ideally, the respective bypass inlets are spaced apart from each other.

Preferably, the valve abutting wall is adapted for sealably abutting the valve.

Preferably, the chamber abutting wall is adapted for sealably engaging the wall of the chamber adjacent the outlet therefrom. Advantageously, the chamber abutting wall defines a portion of the wall of the chamber against which it abuts.

In a still further embodiment of the invention the outer wall of the housing forms a top wall thereof extending between the valve abutting wall and the chamber abutting wall, and one of the bypass inlets is located in the top wall.

In one embodiment of the invention one of the bypass means comprises a first bypass means, and the bypass inlet thereof is provided by a first bypass inlet, and a closure means is provided, the closure means being selectively operable between a closed state closing the first bypass means and an open state communicating the first bypass means with the chamber.

Preferably, the closure means is pivotally coupled to the housing, and is pivotal between the open and closed states. Advantageously, the closure means is adapted for coupling to a first operating means for operating the closure means from the closed state to the open state in response to liquid level in the chamber increasing above a first predetermined level.

Ideally, an urging means is provided for urging the closure means into the closed state. Preferably, the closure means is of weight so that the weight thereof acts as the urging means for urging the closure means into the closed state.

Alternatively, the closure means is adapted for coupling to a second operating means for remote manual operation of the closure means from the closed to the open state.

Preferably, a bracket extending from the closure means is provided for coupling one or both of the first and second operating means to the closure means.

Advantageously, the closure means comprises a closure plate.

In another embodiment of the invention the bypass duct of the first bypass means is provided by a first bypass duct communicating the first bypass inlet with the main communicating duct. Preferably, the first bypass inlet is located in one of the side walls of the outer wall of the housing.

In another embodiment of the invention one of the bypass means comprises a second bypass means and the bypass inlet thereof is provided by a second bypass inlet adapted to receive an overflow riser pipe extending upwardly therefrom for communicating the riser pipe with the main communicating duct.

Preferably, the second bypass inlet is adapted for releasably engaging the riser pipe. Advantageously, the second bypass inlet is adapted for engaging the riser pipe with the riser pipe extending upwardly in the chamber to a second predetermined level, the second predetermined level being at a level above the level of the second bypass inlet. Ideally, the second bypass inlet comprises a riser pipe engaging socket for receiving the riser pipe.

In one embodiment of the invention the bypass duct of the second bypass means is provided by a second bypass duct communicating the second bypass inlet with the main communicating duct.

In another embodiment of the invention the second bypass inlet is located in the top wall of the outer wall of the housing.

In one embodiment of the invention the downstream outlet of the main communicating duct defines an outlet pipe engaging means for engaging an outlet pipe extending into the chamber. Preferably, the outlet pipe coupling means is adapted for sealably engaging the outlet pipe. Advantageously, the outlet pipe coupling means is adapted for engaging a corrugated pipe. Ideally, the outlet pipe engaging means comprises an outlet pipe engaging socket for engaging the outlet pipe.

In one embodiment of the invention the outlet pipe coupling socket is adapted for sealably engaging an annular sealing element extending externally around the outlet pipe.

In one embodiment of the invention the coupling device is adapted for coupling a vortex valve to the outlet from the chamber.

In another embodiment of the invention the coupling device is formed of plastics material.

Preferably, the coupling device is formed by a rotational moulding process.

The invention also provides a combination of a valve and of a coupling device according to the invention coupled to the valve with an outlet of the valve communicating with the upstream inlet to the main communicating duct of the coupling device.

In one embodiment of the invention the valve is sealably secured to the coupling device.

In another embodiment of the invention the valve is a vortex valve.

The invention also provides a chamber having an outlet therefrom, a valve located in the chamber, and a coupling device according to the invention coupling an outlet from the valve to the outlet from the chamber.

Preferably, the valve is sealably coupled to the coupling device.

In one embodiment of the invention the coupling device is sealably coupled to the chamber adjacent the outlet therefrom.

In another embodiment of the invention an outlet pipe extends into the chamber, and the coupling device is coupled to the outlet pipe. Preferably, the coupling device is sealably coupled to the outlet pipe.

In one embodiment of the invention the first operating means is coupled to the closure means of the coupling device and is responsive to liquid level in the chamber rising above the first predetermined level for urging the closure means from the closed state to the open state.

Preferably, the first operating means comprises a float. Advantageously, the first operating means is coupled to the closure means by a ligature. Ideally, the ligature coupling the first operating means to the closure means of the coupling device extends upwardly from the closure means through the chamber.

In another embodiment of the invention a riser pipe extends upwardly from one of the bypass inlets of the coupling device to the second predetermined level for accommodating overflow of liquid from the chamber.

Preferably, the coupling device is located within the chamber.

In one embodiment of the invention the valve is a vortex valve.

Further the invention provides a storm water management system comprising a discharge chamber, the discharge chamber having an outlet therefrom and a valve located in the discharge chamber, and a coupling device according to the invention coupling an outlet from the valve to the outlet from the discharge chamber.

Preferably, the valve is sealably coupled to the coupling device. Advantageously, the coupling device is sealably coupled to the discharge chamber adjacent the outlet therefrom. Ideally, an outlet pipe extends into the discharge chamber, and the coupling device is coupled to the outlet pipe.

In one embodiment of the invention the coupling device is sealably coupled to the outlet pipe.

In one embodiment of the invention the first operating means is coupled to the closure means of the coupling device and is responsive to liquid level in the discharge chamber rising above the first predetermined level for urging the closure means from the closed state to the open state. Preferably, the first operating means comprises a float. Advantageously, the first operating means is coupled to the closure means by a ligature.

In another embodiment of the invention the ligature coupling the first operating means to the closure means of the coupling device extends upwardly from the closure means through the discharge chamber.

In another embodiment of the invention a riser pipe extends upwardly from one of the bypass inlets of the coupling device to the second predetermined level for accommodating overflow of water from the discharge chamber.

In one embodiment of the invention the coupling device is located within the discharge chamber.

In another embodiment of the invention the valve is a vortex valve.

The advantages of the invention are many. By virtue of the fact that the coupling device provides a bypass of the valve which is downstream of the valve, and importantly, is independent of the valve, any restrictions on the flow rate of liquid through the valve have no effect on the rate of flow through the bypass means or the main communicating duct, and thus through the coupling device. Thus, the rate of flow through the bypass means and in turn through the outlet from the chamber is entirely dependent on the flow characteristics through the bypass means. Additionally, where the valve is provided by a vortex valve, any vortex action which is induced in the liquid passing through the vortex valve has no effect on the flow rate through the bypass means or through the main communicating duct, and in turn through the outlet from the chamber.

The provision of the bypass means as a first bypass means having a first bypass inlet which is closed by a closure means, and the closure means is operable between a closed state and an open state, is that it allows the first bypass means to be selectively operable when it is desired to bypass the valve to which the coupling device is coupled. By coupling the closure means to the first operating means, the closure means is operable into the open state for opening the first bypass inlet in response to liquid level in the chamber exceeding the first predetermined level, for example, storm water in a discharge chamber from a storm water management system rising above the first predetermined level in the discharge chamber, thereby permitting the valve to which the coupling device is coupled to be bypassed in the event of an exceptional storm water surge. By coupling the closure means to the second operating means, the closure means may be operated remotely, for example, at the top of the chamber, into the open state. The advantage of providing a means for urging the closure means into the closed state is that it permits the first operating means to be provided by a float coupled to the closure means by a ligature, such as a steel rope or the like, and similarly it permits the second operating means to be provided as a ligature, such as a rope coupled to the closure means and extending upwardly through the chamber to the top thereof for operating the closure means remotely thereof.

The provision of the bypass means as a second bypass means is that it permits a riser overflow pipe to be sealably secured thereto, and the riser overflow pipe can extend to the second predetermined level in the chamber.

Thus, when the level of liquid rises in the chamber to the second predetermined level, the liquid automatically overflows from the chamber into the riser overflow pipe, and in turn through the second bypass means into the main communicating duct. The provision of two bypass means in the coupling device has the added advantage that they may be arranged to become operational at different liquid levels in the chamber. For example, the second predetermined level could be set to be lower than the first predetermined level, and in which case, if the overflow through the overflow pipe was insufficient to prevent the liquid in the chamber rising above the second predetermined level, once the liquid level reached the first predetermined level, the first operating means would operate the closure means from the closed state to the open state for further increasing the rate of discharge of liquid from the chamber. Alternatively, the first bypass means could be manually operable, and the second bypass means would be responsive to the level of liquid in the chamber reaching the second predetermined level. Indeed, in exceptional circumstances, both bypass means may be operational simultaneously.

The inclusion of the coupling device in a chamber whereby the coupling device couples the valve to the outlet from the chamber provides ready control and management of flow and overflow of liquid from the chamber.

The provision of the main discharge outlet in the form of an outlet pipe coupling means facilitates direct coupling of the coupling device to an outlet pipe from the chamber which extends into the chamber. Adapting the coupling device to be sealably coupleable to the valve and to a wall of the discharge chamber adjacent the discharge outlet ensures that discharge of liquid from the chamber is accurately controlled either through the valve or the bypass means of the coupling device, as the case may be.

The provision of the coupling device of a plastics material, and in particular, as a plastics material which has been formed by a rotational moulding process, provides a relatively robust coupling device, which can be produced at a relatively low cost from relatively low cost plastics materials.

The invention will be more clearly understood from the following description of some preferred embodiments thereof, which are given by way of example only, with reference to the accompanying drawings, in which:
Fig. 1 is a block representation of a storm water management system according to the invention,
Fig. 2 is a perspective view of a coupling device also according to the invention for coupling a vortex valve to an outlet from a storm water discharge chamber also according to the invention, of the storm water management system of Fig. 1,
Fig. 3 is a front elevational view of the coupling device of Fig. 2,
Fig. 4 is a transverse cross-sectional side elevational view of the coupling device of Fig. 2 on the line IV-IV of Fig. 3,
Fig. 5 is a top plan view of the coupling device of Fig. 2 on the line V-V of Fig. 3,
Fig. 6 is a perspective view of the coupling device of Fig. 2 coupled to the vortex valve,
Fig. 7 is a front elevational view of the coupling device of Fig. 2 coupled to the vortex valve and located in the discharge chamber,
Fig. 8 is a transverse cross-sectional side elevational view of the coupling device of Fig. 2 in the discharge chamber on the line VIII-VIII of Fig. 7,
Fig. 9 is a top plan view of the coupling device of Fig. 2 in the discharge chamber,
Fig. 10 is a perspective view of a discharge chamber according to another embodiment of the invention illustrating a coupling device according to another embodiment of the invention coupling a vortex valve to an outlet of the discharge chamber,
Fig. 11 is a transverse cross-sectional side elevational view of the discharge chamber of Fig. 10 and the coupling device of Fig. 10 coupling the vortex valve to an outlet of the discharge chamber,
Fig. 12 is a transverse cross-sectional end elevational view of the discharge chamber of Fig. 10 on the line XII-XII of Fig. 11,
Fig. 13 is a transverse cross-sectional end elevational view of the discharge chamber of Fig. 10 on the line XIII-XIII of Fig. 10,
Fig. 14 is a top plan view of the discharge chamber of Fig. 10,
Fig. 15 is a transverse cross-sectional side elevational view of a discharge chamber according to another embodiment of the invention illustrating a coupling device according to a further embodiment of the invention coupling a vortex valve to an outlet from the discharge chamber, and
Fig. 16 is a top plan view of a portion of a discharge chamber according to another embodiment of the invention illustrating a coupling device according to a further embodiment of the invention coupling a vortex valve to an outlet
from the discharge chamber.

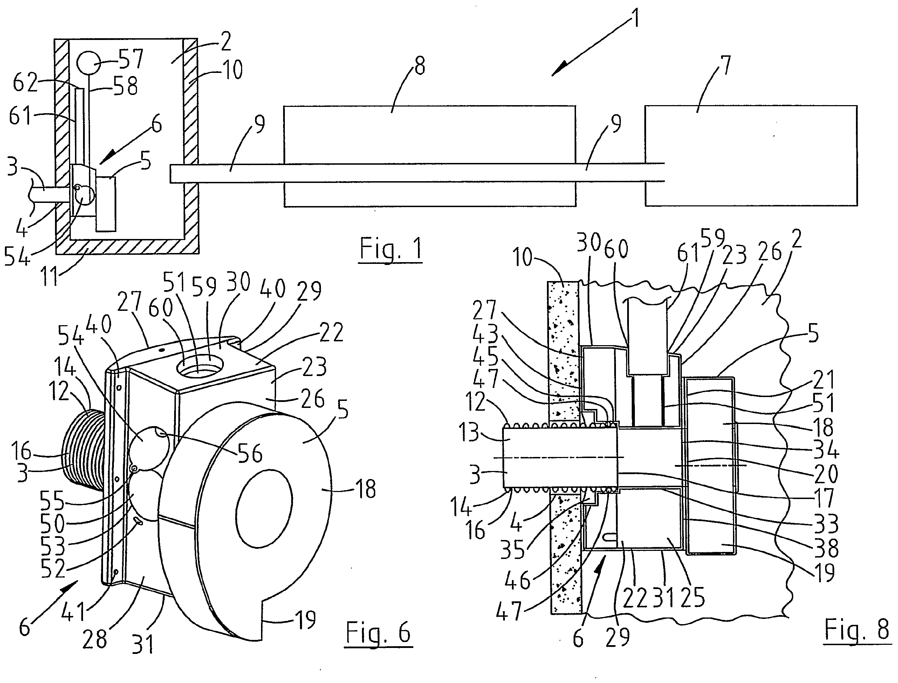

Referring to the drawings and initially to Figs. 1 to 9, there is illustrated a storm water management system according to the invention, indicated generally by the reference numeral 1, for controlling the discharge of storm water into a river or stream (not shown). The storm water management system 1 comprises a discharge chamber 2 also according to the invention, from which the storm water is discharged to the river or stream through an outlet pipe 3 which extends through an outlet opening 4 from the discharge chamber 2. A control valve, in this case a vortex valve 5 for controlling the flow rate of storm water from the discharge chamber 2 is coupled to the outlet pipe 3 by a coupling device also according to the invention and indicated generally by the reference numeral 6. The coupling device 6, as will be described in detail below, facilitates selective bypassing of the vortex valve 5 so that storm water can be discharged from the discharge chamber 2 through the coupling device 6 independently of the vortex valve 5.

The storm water management system 1 comprises a storm water holding tank 7 into which storm water is delivered from a storm water drain system. Storm water is fed from the holding tank 7 to a soak pit 8 through a corrugated pipe 9 which extends from the holding tank 7, through the soak pit 8 and into the discharge chamber 2. The pipe 9 is extensively perforated within the soak pit 8 for discharging storm water into the soak pit 8, where the storm water soaks away through the ground. Excess storm water which is not absorbed by the soak pit 8 is delivered into the discharge chamber 2. The arrangement and construction of such storm water management systems which comprise a holding tank, a soak pit and a discharge chamber will be well known to those skilled in the art, and further description should not be required.

The discharge chamber 2 is of circular transverse cross-section when viewed in plan, and is formed by a cylindrical side wall 10 of steel reinforced concrete, which extends upwardly from a base 11 also of concrete. The outlet opening 4 is formed in the side wall 10 towards the base 11 of the discharge chamber 2, but spaced apart above the base 11. The outlet pipe 3 extending through the outlet opening 4 is of the type commonly referred to as a corrugated pipe, and comprises an outer wall 12 of corrugated construction and an inner wall 13 which forms a smooth internal surface for accommodating flow of storm water therethrough from the discharge chamber 2. The outer wall 12 of corrugated construction comprises a plurality of spaced apart annular ridges 14 which define annular grooves 16 therebetween. The outlet pipe 3 extends into the discharge chamber 2 through the outlet opening 4, and terminates in an inlet 17 which forms an outlet from the discharge chamber 2.

The vortex valve 5 comprises a vortex chamber 18 having an inlet 19 through which water from the discharge chamber 2 enters the vortex chamber 18. An outlet 20 is formed in a rear wall 21 of the vortex valve 5 through which water is discharged from the vortex chamber 18 and in turn from the vortex valve 5.

The coupling device 6 comprises a housing 22 formed by an outer wall 23 which defines a hollow interior region 25. The coupling device 6 is of plastics material and is formed by a rotational moulding process. Rotational moulding processes for plastics material will be well known to those skilled in the art. The outer wall 23 of the housing 22 forms a valve abutting wall, namely, a planar front wall 26 which abuts the rear wall 21 of the vortex valve 5, and a spaced apart chamber abutting wall, provided by an arcuate rear wall 27 for abutting the side wall 10 of the discharge chamber 2. The curvature of the rear wall 27 is similar to the curvature of the side wall 10 of the discharge chamber 2. Spaced apart side walls 28 and 29 extend between the front wall 26 and the rear wall 27. A top wall 30 and a bottom wall 31 spaced apart from the top wall 30 extending between the front wall 26 and the rear wall 27 join the side walls 28 and 29, and together with the front and rear walls 26 and 27 and the side walls 28 and 29 define the hollow interior region 25.

A main communicating duct 33 also of plastics material and integrally formed with the outer wall 23 during the rotational moulding process extends through the hollow interior region 25 from an upstream inlet 34 to a downstream outlet 35. The upstream inlet 34 is defined by the main communicating duct 33 in the front wall 26 for communicating with the outlet 20 of the vortex valve 5. The downstream outlet 35 is defined by the main communicating duct 33 in the rear wall 27 for communicating with the inlet 17 of the outlet pipe 3.

Holes 37 in the front wall 26 are provided for receiving self-tapping screws for securing the vortex valve 5 to the coupling device 6 with a first sealing means, namely, an annular first sealing gasket 38 located between the rear wall 21 of the vortex valve 5 and the front wall 26 of the coupling device 6. The first sealing gasket 38 is in abutting engagement with the rear wall 21 of the vortex valve 5 and the front wall 26 of the coupling device 6, and extends around the upstream inlet 34 for sealing the upstream inlet 34 to the vortex valve 5.

The rear wall 27 is of arcuate shape, which defines the portion of the side wall 10 of the discharge chamber 2 adjacent the coupling device 6. Sidewardly projecting flanges 40 extend from the rear wall 27 adjacent the side walls 28 and 29. Holes 41 extending through the flanges 40 accommodate masonry bolts or screws for securing the coupling device 6 to the side wall 10 of the discharge chamber 2. A second sealing means, namely, a second sealing gasket 43 is provided between the rear wall 27 and the side wall 10 of the discharge chamber 2, and extends around the downstream outlet 35 for sealing the discharge outlet 35 of the coupling device 6 to the side wall 10 of the discharge chamber 2.

The downstream outlet 35 defines a pipe engaging socket 45 for sealably engaging the outlet pipe 3 adjacent the inlet 17 thereof. The pipe engaging socket 45 is formed in an entry socket 46 which extends inwardly from the rear wall 27. The pipe engaging socket 45 is of diameter to sealably engage an O-ring seal 47 located in one of the annular grooves 16 of the outlet pipe 3 adjacent the inlet 17 thereof for sealably engaging the downstream outlet 35 to the outlet pipe 3.

Bypass means for bypassing the vortex valve 5 in this embodiment of the invention are formed by two bypasses, namely, a first bypass means comprising a first bypass duct 50, and a second bypass means comprising a second bypass duct 51, both of which are of plastics material and integrally formed with the outer wall 23 and the main communicating duct 33 during the rotational moulding process. The first bypass duct 50 extends through the hollow interior region 25 from a first bypass inlet 53, defined by the first bypass duct 50 in the side wall 28, to the main communicating duct 33 for in turn communicating the first bypass inlet 53 with the main communicating duct 33 to bypass the vortex valve 5.

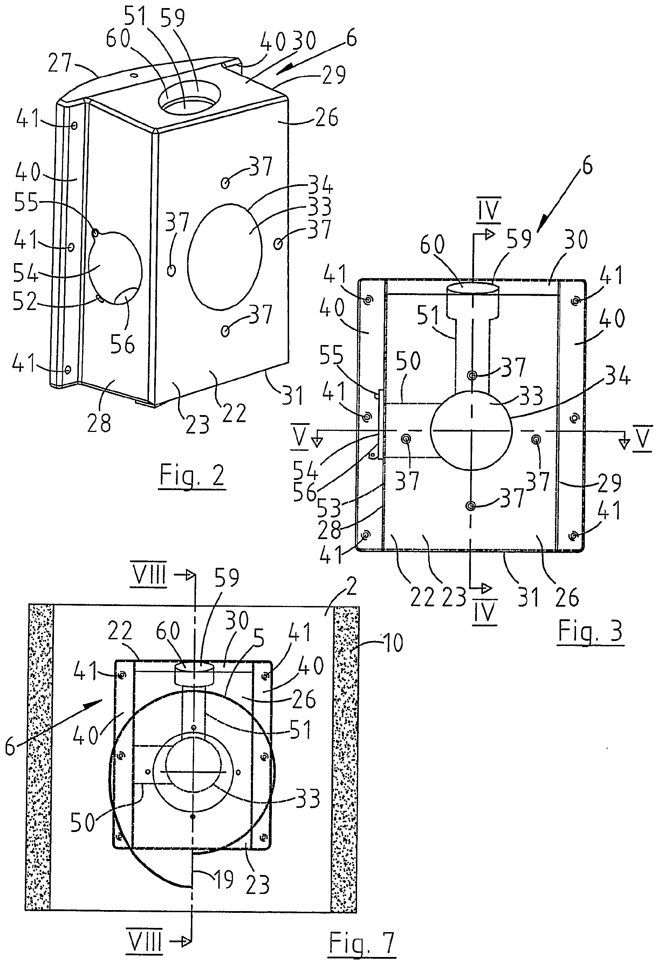

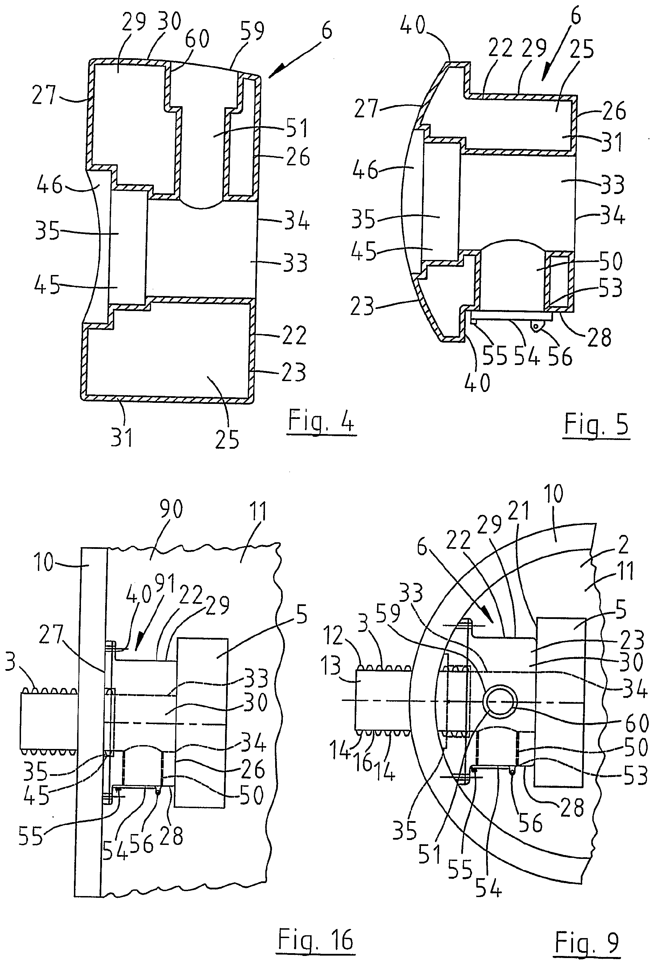

A closure means, in this embodiment of the invention a closure plate 54 is freely pivotal on a pivot pin 55 extending outwardly from the side wall 28 adjacent the first inlet 53, and is selectively operable between a closed state illustrated in Figs. 2 and 5 closing the first inlet 53, and an open state illustrated in Fig. 6 with the first inlet 53 open. A bracket 56 extending from the closure plate 57 is coupled to a first operating means, namely, a float 57 by a ligature, namely, a steel rope 58, so that the closure plate 54 is urgeable into the open state in response to the level of storm water in the discharge chamber 2 rising above a first predetermined level, for accommodating storm water from the discharge chamber 2 through the first bypass duct 50 into the main communicating duct 33 and through the outlet pipe 3 bypassing the vortex valve 5. The rope 58 is of length so that when the storm water in the discharge chamber 2 reaches the first predetermined level, further raising of the float 57 by the rising level of the storm water commences urging of the closure plate 54 from the closed state to the open state. The closure plate 54 in this embodiment of the invention is of stainless steel, and is of weight sufficient that its own weight acts as an urging means for urging the closure plate 54 into the closed state as the storm water level in the discharge chamber 2 commences to fall, and falls to the first predetermined level. The pivot pin 55 on which the closure plate 54 is pivotal is located to one side of the first bypass inlet 53 and just above a central horizontal plane extending through the first bypass duct 50 for maximising the urging effect of the weight of the closure plate 54 for urging the closure plate 54 into the closed state. An abutment member 52 extending from the side wall 28 beneath the first bypass inlet 53 abuts the closure plate 54 in the closed state for maintaining the closure plate 54 in the closed state.

The second bypass duct 51 extends through the hollow interior region 25 from a second bypass inlet 59 defined by the second bypass duct 51 in the top wall 30 to the main communicating duct 33 for communicating the second bypass inlet 59 with the main communicating duct 33 for bypassing the vortex valve 5. The second bypass inlet 59 forms an inlet socket 60 for sealably engaging a riser overflow pipe 61 which extends upwardly from the coupling device 6 to a second predetermined level 62 in the discharge chamber 2 for accommodating overflow storm water from the discharge chamber 2 when the level of storm water in the discharge chamber 2 reaches the second predetermined level 62 to the second bypass duct 51, and in turn through the main communicating duct 33 and through the outlet pipe 3.

In this embodiment of the invention the second predetermined level 62 is at a level below the first predetermined level at which the float 57 commences to operate the closure plate 54 from the closed state to the open state, so that if the overflow of storm water through the overflow pipe 61 is insufficient to prevent the storm water rising to the first predetermined level, once the storm water reaches the first predetermined level, the float 57 commences to operate the closure plate 54 from the closed state to the open state, thereby permitting the discharge of storm water from the discharge chamber 2 through the first and second bypass ducts 50 and 51 into the main communicating duct 33 and through the outlet pipe 3, as well as through the vortex valve 5.

In use, the vortex valve 5 is initially secured to the coupling device 6 by self-tapping screws (not shown) through the rear wall 21 of the vortex valve 5 which engage the holes 37 in the front wall 26 of the coupling device 6. Prior to securing the vortex valve 5 to the coupling device 6, the first sealing gasket 38 is located between the rear wall 21 of the vortex valve 5 and the front wall 26 of the coupling device 6. The O-ring seal 47 is engaged in one of the annular grooves 16 of the outlet pipe 3 adjacent the inlet 17 thereto, and with the second sealing gasket 43 secured to the rear wall 27 of the coupling device 6, the coupling device 6 is secured to the side wall 10 of the discharge chamber 2 by masonry screws or bolts (not shown) through the holes 41 with the second sealing gasket 43 sealably located between the rear wall 27 of the coupling device 6 and the side wall 10 of the discharge chamber 2. While the coupling device 6 is being offered up to the side wall 10 of the discharge chamber 2, the pipe engaging socket 45 is engaged on the outlet pipe 3 adjacent the inlet 17 thereto with the O-ring seal 47 in sealable engagement with the pipe engaging socket 45.

The riser overflow pipe 61 is then sealably engaged in the inlet socket 60 of the second bypass inlet 59 and extends upwardly through the discharge chamber 2 to define the second predetermined level 62. The steel rope 58 with the float 57 secured thereto is secured to the bracket 56 of the closure plate 54, so that as storm water rises in the discharge chamber 2 the float 57 floating on the storm water raises the rope 58 upwardly in the discharge chamber 2.

With the coupling device 6 and the vortex valve 5 so secured to the side wall 10 of the discharge chamber 2, the discharge chamber 2 is ready for use. As storm water flows into the discharge chamber 2 through the pipe 9, and reaches the level of the vortex valve 5, the storm water flows into the vortex chamber 18 through the inlet 19, and in turn through the outlet 20 into the main communicating duct 33 where it is discharged into the outlet pipe 3, and thus discharged from the discharge chamber 2. Initially, while the level of storm water is only slightly above the vortex valve 5, the water flows through the vortex valve 5 without a vortex action being induced therein. However, as the water level rises in the discharge chamber 2, the pressure head of water on the vortex valve 5 induces the vortex action in the storm water flowing through the vortex valve 5, thereby controlling the rate of flow of storm water through the vortex valve 5, and in turn through the coupling device 6 and through the outlet pipe 3. However, should the level of storm water in the discharge chamber 2 rise to the second predetermined level 62 defined by the riser overflow pipe 61 as a result of an exceptional storm water surge, the storm water overflows through the riser overflow pipe 61 and into the second bypass duct 51, through which it is discharged into the main communicating duct 33, and in turn through the outlet pipe 3 independently of and bypassing the vortex valve 5, and without any restricting effect of the vortex action induced by the vortex valve 5 affecting the flow of the overflow water through the main communicating duct 33.

Should the storm water continue to rise above the second predetermined level 62 defined by the riser overflow pipe 61, on the storm water reaching the first predetermined level, the float 57 which is coupled to the closure plate 54 by the steel rope 58 commences to operate the closure plate 54 from the closed state. Further rising of the storm water in the discharge chamber 2 above the first predetermined level causes the float 57 to operate the closure plate 54 into the open state, and in turn the fully open state. Thus, storm water from the discharge chamber 2 is discharged through the first and second bypass ducts 50 and 51 through the main communicating duct 33 to the outlet pipe 3, as well as through the vortex valve 5, until the level of storm water in the discharge chamber falls below the first predetermined level. At which stage, storm water is still discharged from the discharge chamber 2 through the second bypass duct 51 and the vortex valve 5, until the level of storm water falls below the second predetermined level 62, at which stage storm water from the discharge chamber 2 is accommodated through the vortex valve 5 only and in turn through the main communicating duct 33 to the outlet pipe 3, and discharge of storm water from the discharge chamber 2 continues under the control of the vortex valve 5 only.

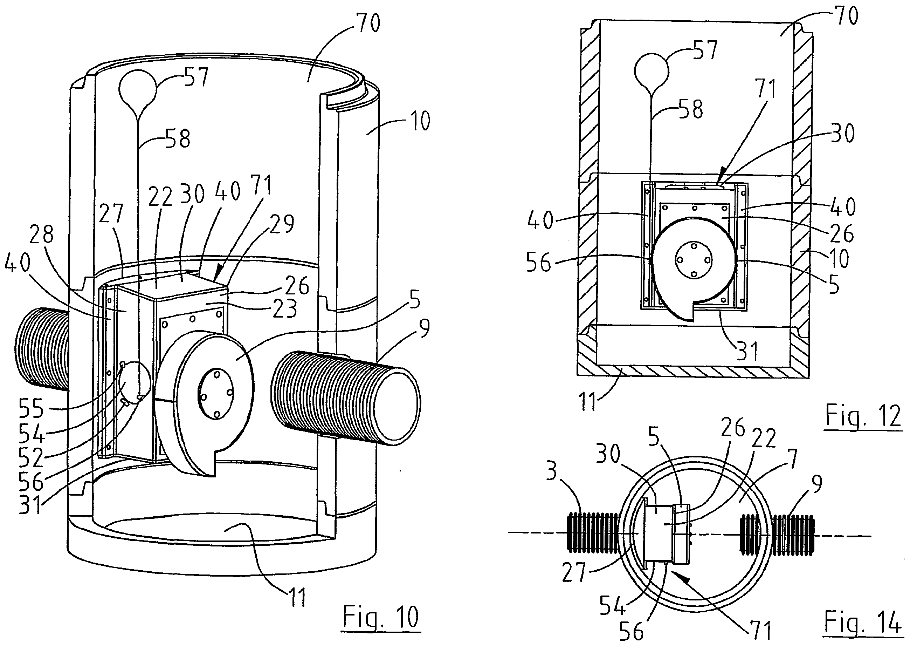

Referring now to Figs. 10 to 14, there is illustrated a discharge chamber 70, also according to the invention, of a storm water management system (not shown), but which is similar to the storm water management system 1 described with reference to Fig. 1. The discharge chamber 70 is similar to the discharge chamber 2 and similar components are identified by the same reference numerals. A vortex valve 5 similar to the vortex valve 5 of the discharge chamber 2 is coupled to an outlet pipe 3 from the discharge chamber 70 through a coupling device according to another embodiment of the invention, which is indicated generally by the reference numeral 71. The coupling device 71 is substantially similar to the coupling device 6 described with reference to Figs. 1 to 9, and similar components are identified by the same reference numerals. The only difference between the coupling device 71 and the coupling device 2 is that the second bypass duct 51 has been omitted, and in turn the second bypass inlet 59 has similarly been omitted. However, otherwise the coupling device 71 and the discharge chamber 70 are similar to the coupling device 6 and the discharge chamber 2 of the storm water management system 1 described with reference to Figs. 1 to 9, and operation of the coupling device 71 is likewise similar to that described with reference to the coupling device 6, with the exception that overflow of storm water bypassing the vortex valve 5 does not commence until the storm water level in the discharge chamber 70 reaches the first predetermined level at which the float 57 commences to operate the closure plate 54 through the steel rope 58 from the closed to the open state, thereby permitting discharge of the storm water through the first bypass duct 50 and in turn through the main communicating duct 33 to the outlet pipe 3.

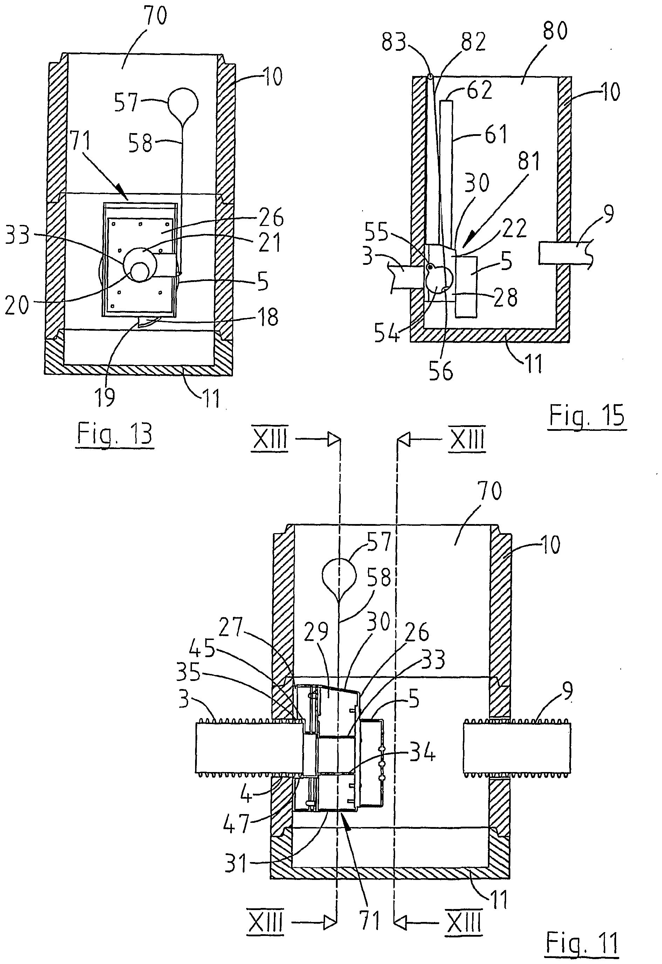

Referring now to Fig. 15, there is illustrated a discharge chamber 80 also according to the invention of a storm water management system (not shown), which is also according to the invention and is similar to the storm water management system 1 described with reference to Figs. 1 to 9. The discharge chamber 80 is substantially similar to the discharge chamber 2 and similar components are identified by the same reference numerals. In this embodiment of the invention a vortex valve 5 is coupled to an outlet pipe 3 from the discharge chamber 80 through a coupling device according to another embodiment of the invention, indicated generally by the reference numeral 81. The coupling device 81 is substantially similar to the coupling device 6 described with reference to Figs. 1 to 9, and similar components are identified by the same reference numerals. The only difference between the coupling device 81 and the coupling device 6 is that instead of the closure plate 54 of the coupling device 81 being coupled to a float through a steel rope for operating the closure plate 54 from the closed state to the open state in the event of the storm water level rising above the first predetermined level, in this embodiment of the invention a second operating means is provided for operating the closure plate 54 from the closed state to the open state. In this case the second operating means comprises a steel rope 82 which is coupled to the bracket 56 of the closure plate 54 and is also coupled to an anchorage 83 adjacent the top of the discharge chamber 80 for facilitating remote manual operation of the closure plate 54 from the closed to the open state. Thus, in this embodiment of the invention where it is desired to discharge storm water from the discharge chamber 80 through the first bypass duct 50 and in turn through the main communicating duct 33 to the outlet pipe 3, the steel rope 82 is gripped adjacent the anchorage 83 and is urged upwardly, thus pivoting the closure plate 54 from the closed state to the open state.

Otherwise, the discharge chamber 80 and the coupling device 81 are similar to the discharge chamber 2 and the coupling device 6 described with reference to Figs. 1 to 9, and their operation is likewise similar, with the exception that the closure plate 54 of the coupling device 81 is manually operable, rather than being operable in response to the storm water level in the discharge chamber 80.

Referring now to Fig. 16, there is illustrated a portion of a discharge chamber 90 according to another embodiment of the invention for use in a storm water management system (not shown), but similar to the storm water management system of Fig. 1. The discharge chamber 90 is similar to the discharge chamber 2 described with reference to Figs. 1 to 9, and similar components are identified by the same reference numerals. In this embodiment of the invention a vortex valve 5 is coupled to an outlet pipe 3 from the discharge chamber 90 through a coupling device according to another embodiment of the invention and indicated generally by the reference numeral 91. The coupling device 91 is similar to the coupling device 71 described with reference to Figs. 10 to 14 and similar components are identified by the same reference numerals. In this embodiment of the invention the second bypass duct and the second bypass inlet are omitted. However, the closure plate 54 is coupled to a float (not shown) by a steel rope (also not shown), but which are similar to the float 57 and the steel rope 58, respectively, of the coupling device 71. The main difference between the coupling device 91 and the coupling device 71 is that the coupling device 91 is adapted for mounting in the discharge chamber 90, which in this embodiment of the invention is of rectangular shape when viewed in plan view. Accordingly, the rear wall 27 of the coupling device 91 is planar, instead of being arcuate as in the case of the coupling devices 2, 71 and 81, so that the rear wall 27 defines the planar surface of the portion of the side wall 10 of the discharge chamber 90 against which the rear wall 27 abuts. Thus, with the second sealing gasket 43 located between the side wall 10 of the discharge chamber 90 and the rear wall 27 of the coupling device 90 and extending around the downstream outlet 35, the rear wall 27 can be brought into tight sealing engagement with the second sealing gasket 43 and the side wall 10 of the discharge chamber 90 for providing a watertight seal between the coupling device 91 and the outlet opening 4 from the discharge chamber 90.

Otherwise the discharge chamber 90 and the coupling device 91 are similar to the discharge chamber 70 and the coupling device 71, and their operation is likewise similar.

While the coupling devices according to the invention have been described as being formed by rotational moulding, while it is desirable that the coupling devices should be formed by rotational moulding, this is not essential. The coupling devices may be formed by any other suitable moulding process in cases where the coupling devices are of plastics material. However, it will also be appreciated that the coupling devices may be constructed of materials other than plastics materials, for example, steel or other suitable metals.

It will also be appreciated that the construction and shape of the housing of the coupling devices may be different from that described, and typically, will be of suitable shape and construction for sealably coupling a valve to an outlet of a storm water discharge or other chamber, as the case may be. It will of course be appreciated that while the coupling devices have been described for use in coupling a vortex valve to an outlet of a storm water discharge chamber, the coupling device may be provided for coupling a vortex valve, or indeed, any other valve, and in particular, any other flow control valve to a discharge outlet of a chamber, whether the chamber is for discharging storm water or any other liquid. Additionally, it is envisaged that the coupling device may be adapted for coupling any other valve to any other outlet from any other chamber, for example, the coupling device may be adapted for coupling an orifice plate, a gate valve, a slide valve or other flow control devices to an outlet from a chamber.

It will also be appreciated that where a coupling device is provided with only one bypass means, the bypass means may be provided by either one of the first and second bypass ducts. For example, in some embodiments of the invention the coupling device may be provided with the second bypass duct only and the second bypass duct would be adapted for coupling a riser overflow pipe to the coupling device. In which case the first bypass duct would be omitted.

Needless to say, any other suitable closure means besides a pivotally mounted closure plate may be provided for closing the first bypass inlet, and it is also envisaged that where the closure means is provided by a closure plate, any other means for urging the closure plate into the closed state besides relying on the weight of the closure plate to act as an urging means may be provided. For example, the closure plate may be spring biased into the closed state by, for example, a torsion spring, a tension spring, a compression spring or the like.

It is also envisaged that in certain cases the coupling devices may be provided with more than two bypass means, for example, three bypass ducts may be provided, and if three bypass ducts were provided, it is envisaged that one of the bypass ducts would be similar to the second bypass duct, and the other two bypass ducts would be similar to the first bypass ducts. It is also envisaged that in certain embodiments of the coupling device, two first bypass ducts may be provided which would terminate in respective first bypass inlets in the respective opposite side walls 28 and 29 of the coupling device. In which case, each first bypass inlet would be closed by a corresponding closure means, and one of the closure means may be operated by a first operating means, and the other closure means may be operated by a second operating means.

While the outlet pipe from the discharge chamber has been described as being a corrugated pipe, the outlet pipe may be provided by any other type of outlet pipe, and in certain cases, the outlet pipe may not extend into the discharge chamber.

## Claims

1. A coupling device (6,71,81,91) for coupling a valve (5) to an outlet (3,4) from a chamber (2,70,80,90) with the valve (5) located in the chamber (2,70,80,90), the coupling device (6,71,81,91) comprising a housing (22), a main communicating duct (33) extending through the housing (22) for communicating the valve (5) with the outlet (3,4) from the chamber, the main communicating duct (33) extending between an upstream inlet (34) adapted for communicating with an outlet (20) of the valve (5), and a downstream outlet (35) adapted for communicating with the outlet (3,4) from the chamber, and at least one bypass means located in the housing (22) communicating the main communicating duct (33) with the chamber bypassing the valve (5), wherein the housing (22) is formed by an outer wall (23) defining the outer surface of the housing (22) and defining a hollow interior region (25), the outer wall (23) of the housing (22) comprising a valve abutting wall (26) for abutting the valve (5), a chamber abutting wall (27) for abutting the wall (10) of the chamber adjacent the outlet (3,4) therefrom, and a side wall (28,29,30,31) extending between the valve abutting wall (26) and the chamber abutting wall (27), the upstream inlet (34) is located in the valve abutting wall (26), the downstream outlet (35) is located in the chamber abutting wall (27), and at least one bypass inlet (53,59) is located in the side wall (28,29,30,31), **characterised in that** the main communicating duct (33) extends through the hollow interior region (25) between the upstream inlet (34) and the downstream outlet (35) thereof, and the at least one bypass means comprises a respective at least one bypass duct (50,51) extending through the hollow interior region (25) from the respective at least one inlet (53,59) to the main communicating duct (33) at a location intermediate the upstream inlet (34) and the downstream outlet (35) thereof.

2. A coupling device as claimed in Claim 1 **characterised in that** the valve abutting wall (26) is adapted for sealably abutting the valve (5).

3. A coupling device as claimed in Claim 1 or 2 **characterised in that** the chamber abutting wall (27) is adapted for sealably engaging the wall (10) of the chamber adjacent the outlet (3,4) therefrom.

4. A coupling device as claimed in any preceding claim **characterised in that** the chamber abutting wall (27) defines a portion of the wall (10) of the chamber against which it abuts.

5. A coupling device as claimed in any preceding claim **characterised in that** the outer wall (23) of the housing (22) forms a top wall (30) thereof, the top wall (30) being part of said side wall (28,29,30,31) and extending between the valve abutting wall (26) and the chamber abutting wall (27), and one of the bypass inlets (53,59) is located in the top wall (30).

6. A coupling device as claimed in any preceding claim **characterised in that** one of the at least one bypass means comprises a first bypass duct (50), and the bypass inlet (53,59) thereof is provided by a first bypass inlet (53), and a closure means (54) is provided, the closure means (54) being selectively operable between a closed state closing the first bypass duct (50) and an open state communicating the first bypass duct (50) with the chamber.

7. A coupling device as claimed in Claim 6 **characterised in that** the closure means (54) is adapted for coupling to an operating means (57, 82,83) for operating the closure means (54) from the closed state to the open state in response to liquid level in the chamber increasing above a first predetermined level.

8. A coupling device as claimed in Claim 6 or 7 **characterised in that** an urging means is provided for urging the closure means (54) into the closed state.

9. A coupling device as claimed in any preceding claim **characterised in that** one of the at least one bypass means comprises a second bypass duct (51) and the bypass inlet (53,59) thereof is provided by a second bypass inlet (59) adapted to receive an overflow riser pipe (61) extending upwardly therefrom for communicating the riser pipe (61) with the main communicating duct (33).

10. A coupling device as claimed in Claim 9 **characterised in that** the second bypass inlet (59) is adapted for releasably engaging the riser pipe (61).

11. A coupling device as claimed in any preceding claim **characterised in that** the coupling device (6,71,81,91) is adapted for coupling a vortex valve (5) to the outlet (3, 4) from the chamber.

12. A coupling device as claimed in any preceding claim **characterised in that** the coupling device (6,71,81,91) is formed of plastics material.

13. A coupling device as claimed in any preceding claim **characterised in that** the coupling device (6,71,81,91) is formed by a rotational moulding process.

14. A combination of a valve (5) and of a coupling device (6,71,81,91) as claimed in any preceding claim coupled to the valve (5) with an outlet (20) of the valve (5) communicating with the upstream inlet (34) to the main communicating duct (33) of the coupling device (6,71,81,91).

15. A chamber having an outlet (3,4) therefrom, a valve (5) located in the chamber, and a coupling device (6,71,81,91) as claimed in any of Claims 1 to 13 coupling an outlet (20) from the valve (5) to the outlet (3,4) from the chamber.

16. A chamber as claimed in Claim 15 **characterised in that** a riser pipe (61) extends upwardly from one of the at least one bypass inlets (53,59) of the coupling device (6,71,81,91) to a second predetermined level for accommodating overflow of liquid from the chamber.

17. A storm water management system comprising a discharge chamber (2,70, 80,90), the discharge chamber having an outlet (3,4) therefrom and a valve (5) located in the discharge chamber, and a coupling device (6,71,81,91) as claimed in any of Claims 1 to 13 coupling an outlet (20) from the valve (5) to the outlet (3,4) from the discharge chamber.

## Patentansprüche

1. Verbindungsvorrichtung (6, 71, 81, 91) zur Verbindung eines Ventils (5) mit einem Auslass (3, 4) einer Kammer (2, 70, 80, 90), wobei das Ventil (5) innerhalb der Kammer (2, 70, 80, 90) angeordnet ist;
wobei die Verbindungseinrichtung (6, 71, 81, 91) ein Gehäuse (22), ein Hauptleitungsrohr (33), das sich durch das Gehäuse (22) erstreckt, um das Ventil (5) mit dem Auslass (3, 4) zu verbinden, und das sich erstreckt zwischen einem zuströmseitigen Einlass (34), der zu einer Verbindung mit einem Auslass (20) des Ventils (5) vorgesehen ist, und zumindest einem dazu abströmseitigen Auslass (35), der zu einer Verbindung mit einem Auslass (3, 4) der Kammer vorgesehen ist, und zumindest ein innerhalb des Gehäuses (22) angeordnetes Umgehungsmittel umfasst, welches das Hauptleitungsrohr (33) unter Umgehung des Ventils (5) mit der Kammer verbindet;
wobei das Gehäuse (22) von einer eine äußere Oberfläche des Gehäuses (22) und einen hohlen Innenbereich (25) definierenden äußeren Wandung (23) gebildet ist, die eine an das Ventil (5) angrenzende Wandung (26), eine an die Kammer angrenzende Wandung (27), die an eine neben dem Auslass (3, 4) angeordnete Wandung (10) des Kammer angrenzt, und eine sich zwischen der an das Ventil angrenzenden Wandung (26) und der an die Kammer angrenzenden Wandung (27) erstreckende Seitenwandung (28, 29, 30, 31) umfasst;
wobei der zuströmseitige Einlass (34) in der an das Ventil angrenzenden Wandung (26) angeordnet ist, der dazu abströmseitige Auslass (25) in der an die Kammer angrenzenden Wandung (27) angeordnet ist, und zumindest ein Umgehungseinlass (53, 59) in der Seitenwandung (28, 29, 30, 31) angeordnet ist,
**dadurch gekennzeichnet, dass**
sich das Hauptleitungsrohr (33) zwischen dem zuströmseitigen Einlass (34) und dem dazu abströmseitigen Auslass (35) durch den hohlen Innenbereich (25) erstreckt;
und das zumindest eine Umgehungsmittel zumindest ein entsprechendes Umgehungsleitungsrohr (50, 51) umfasst, das sich von dem entsprechenden zumindest einen Einlass (53, 59) zu dem Hauptleitungsrohr (33) an einer Position zwischen dem zuströmseitigen Einlass (34) und dem dazu abströmseitigen Auslass (35) durch den hohlen Innenbereich (25) erstreckt.

2. Verbindungsvorrichtung nach Anspruch 1, **dadurch gekennzeichnet, dass** die an das Ventil angrenzende Wandung (26) dazu eingerichtet ist, abdichtbar an das Ventil (5) anzugrenzen.

3. Verbindungsvorrichtung nach Anspruch 1 oder 2, **dadurch gekennzeichnet, dass** die an die Kammer angrenzende Wandung (27) dazu eingerichtet ist, abdichtbar mit der neben dem Auslass (3, 4) angeordneten Wandung (10) der Kammer in Verbindung gebracht zu werden.

4. Verbindungsvorrichtung nach einem der vorhergehenden Ansprüche, **dadurch gekennzeichnet, dass** die an die Kammer angrenzende Wandung (27) einen Teil der Wandung (10) der Kammer definiert, an welche sie angrenzt.

5. Verbindungsvorrichtung nach einem der vorhergehenden Ansprüche, **dadurch gekennzeichnet, dass** die äußere Wandung (23) des Gehäuses (22) eine obere Wandung (30) ausbildet, die Teil der Seitenwandung (28, 29, 30, 31) ist, und die sich zwischen der an das Ventil angrenzenden Wandung (26) und der an die Kammer angrenzenden Wandung (27) erstreckt, wobei einer der Umgehungseinlässe (53, 59) in der oberen Wandung (30) angeordnet ist.

6. Verbindungsvorrichtung nach einem der vorhergehenden Ansprüche, **dadurch gekennzeichnet, dass** zumindest eines der Umgehungsmittel ein erstes Umgehungsleitungsrohr (50) umfasst, wobei der Umgehungseinlass (53, 59) desselben von einem ersten Umgehungseinlass (53) gebildet ist, und wobei ein Verschließmittel (54) vorgesehen ist, das selektiv zwischen einem geschlossenen Zustand, in welchem es das erste Umgehungsleitungsrohr (50) verschließt, und einem geöffneten Zustand, in welchem es das erste Umgehungsleitungsrohr (50) mit der Kammer verbindet, betätigbar ist.

7. Verbindungsvorrichtung nach Anspruch 6, **dadurch gekennzeichnet, dass** das Verschließmittel (54) dazu eingerichtet ist, mit einem Betätigungsmittel (57, 82, 83) verbunden zu werden, das zur Betätigung des Verschließmittels (54) von dem geschlossenen Zustand zu dem geöffneten Zustand als Reaktion auf ein über ein vorgegebenes erstes Niveau ansteigendes Flüssigkeitsniveau in der Kammer vorgesehen ist.

8. Verbindungsvorrichtung nach Anspruch 6 oder 7, **dadurch gekennzeichnet, dass** ein Antriebsmittel vorgesehen ist, das dazu eingerichtet ist, das Verschließmittel (54) in den geschlossenen Zustand zu versetzen.

9. Verbindungsvorrichtung nach einem der vorhergehenden Ansprüche, **dadurch gekennzeichnet, dass** eines der zumindest einen Umgehungsmittel ein zweites Umgehungsrohr (51) umfasst, wobei dessen Umgehungseinlass (53, 59) von einem zweiten Umgehungseinlass (59) gebildet ist, der dazu vorgesehen ist, eine Steigleitung (61) für Überfluss aufzunehmen, die sich davon ausgehend nach oben erstreckt, um die Steigleitung (61) mit dem Hauptleitungsrohr (33) zu verbinden.

10. Verbindungsvorrichtung nach Anspruch 9, **dadurch gekennzeichnet, dass** der zweite Umgehungseinlass (59) dazu vorgesehen ist, lösbar mit der Steigleitung (61) verbindbar zu sein.

11. Verbindungsvorrichtung nach einem der vorhergehenden Ansprüche, **dadurch gekennzeichnet, dass** die Verbindungsvorrichtung (6, 71, 81, 91) dazu eingerichtet ist, ein Wirbelventil (5) mit dem Auslass (3, 4) der Kammer zu verbinden.

12. Verbindungsvorrichtung nach einem der vorhergehenden Ansprüche, **dadurch gekennzeichnet, dass** die Verbindungsvorrichtung (6, 71, 81, 91) aus Kunststoff ausgebildet ist.

13. Verbindungsvorrichtung nach einem der vorhergehenden Ansprüche, **dadurch gekennzeichnet, dass** die Verbindungsvorrichtung (6, 71, 81, 91) durch ein Rotationsformen gefertigt ist.

14. Kombination eines Ventils (5) und einer mit dem Ventil (5) verbundenen Verbindungsvorrichtung (6, 71, 81, 91) nach einem der vorhergehenden Ansprüche, wobei ein Auslass (20) des Ventils (5) über den zuströmseitigen Einlass (34) mit dem Hauptleitungsrohr (33) der Verbindungsvorrichtung (6, 71, 81, 91) verbunden ist.

15. Kammer mit einem aus dieser führenden Auslass (3, 4), mit einem in der Kammer angeordneten Ventil (5), und mit einer Verbindungsvorrichtung (6, 71, 81, 91) nach einem der Ansprüche 1 bis 13, die einen Auslass (20) des Ventils (5) mit dem Auslass (3, 4) der Kammer verbindet.

16. Kammer nach Anspruch 15, **dadurch gekennzeichnet, dass** eine Steigleitung (61) sich ausgehend von einem der zumindest einen Umgehungseinlässe (53, 59) der Verbindungsvorrichtung (6, 71, 81, 91) nach oben zu einem zweiten vorgegebenen Niveau erstreckt, um einen Überfluss von Flüssigkeit der Kammer aufzunehmen.

17. System zur Handhabung von Regenwasser, umfassend:
eine Abflusskammer (2, 70, 80, 90) mit einem aus dieser führenden Auslass (3, 4) und mit einem in der Abflusskammer angeordneten Ventil (5);
und eine Verbindungsvorrichtung (6, 71, 81, 91) nach einem der Ansprüche 1 bis 13, die einen Auslass (20) des Ventils (5) mit dem Auslass (3, 4) der Abflusskammer verbindet.

## Revendications

1. Dispositif de couplage (6, 71, 81, 91) pour coupler une valve (5) à une sortie (3, 4) d'une chambre (2, 70, 80, 90) avec la valve (5) positionnée dans la chambre (2, 70, 80, 90), le dispositif de couplage (6, 71, 81, 91) comprenant un boîtier (22), un conduit de communication principal (33) s'étendant à travers le boîtier (22) pour faire communiquer la valve (5) avec la sortie (3, 4) de la chambre, le conduit de communication principal (33) s'étendant entre une entrée en amont (34) adaptée pour communiquer avec une sortie (20) de la valve (5), et une sortie en aval (35) adaptée pour communiquer avec la sortie (3, 4) de la chambre, et au moins un moyen de dérivation positionné dans le boîtier (22) faisant communiquer le conduit de communication principal (33) avec la chambre contournant la valve (5), dans lequel le boîtier (22) est formé par une paroi externe (23) définissant la surface externe du boîtier (22) et définissant une région intérieure creuse (25), la paroi externe (23) du boîtier (22) comprenant une paroi de butée de valve (26) pour venir en butée contre la valve (5), une paroi de butée de chambre (27) pour venir en butée contre la paroi (10) de la chambre adjacente à la sortie (3, 4) de cette dernière, et une paroi latérale (28, 29, 30, 31) s'étendant entre la paroi de butée de valve (26) et la paroi de butée de chambre (27), l'entrée en amont (34) est positionnée dans la paroi de butée de valve (26), la sortie en aval (35) est positionnée dans la paroi de butée de chambre (27), et au moins une entrée de dérivation (53, 59) est positionnée dans la paroi latérale (28, 29, 30, 31), **caractérisé en ce que** :
le conduit de communication principal (33) s'étend à travers la région intérieure creuse (25) entre l'entrée en amont (34) et sa sortie en aval (35), et le au moins un moyen de dérivation comprend au moins un conduit de dérivation (50, 51) respectif s'étendant à travers la région intérieure creuse (25) à partir d'au moins une entrée (53, 59) respective jusqu'au conduit de communication principal (33) à un emplacement entre l'entrée en amont (34) et sa sortie en aval (35) .

2. Dispositif de couplage selon la revendication 1, **caractérisé en ce que** la paroi de butée de valve (26) est adaptée pour venir en butée contre la valve (5), de manière étanche.

3. Dispositif de couplage selon la revendication 1 ou 2, **caractérisé en ce que** la paroi de butée de chambre (27) est adaptée pour mettre en prise, de manière étanche, la paroi (10) de la chambre adjacente à la sortie (3, 4) de cette dernière.

4. Dispositif de couplage selon l'une quelconque des revendications précédentes, **caractérisé en ce que** la paroi de butée de chambre (27) définit une partie de la paroi (10) de la chambre contre laquelle elle vient en butée.

5. Dispositif de couplage selon l'une quelconque des revendications précédentes, **caractérisé en ce que** la paroi externe (23) du boîtier (22) forme sa paroi supérieure (30), la paroi supérieure (30) faisant partie de ladite paroi latérale (28, 29, 30, 31) et s'étendant entre la paroi de butée de valve (26) et la paroi de butée de chambre (27), et l'une des entrées de dérivation (53, 59) est positionnée dans la paroi supérieure (30).

6. Dispositif de couplage selon l'une quelconque des revendications précédentes, **caractérisé en ce que** le au moins un moyen de dérivation comprend un premier conduit de dérivation (50), et son entrée de dérivation (53, 59) est fournie par une première entrée de dérivation (53), et un moyen de fermeture (54) est prévu, le moyen de fermeture (54) pouvant être sélectivement actionné entre un état fermé fermant le premier conduit de dérivation (50) et un état ouvert faisant communiquer le premier conduit de dérivation (50) avec la chambre.

7. Dispositif de couplage selon la revendication 6, **caractérisé en ce que** le moyen de fermeture (54) est adapté pour se coupler à un moyen d'actionnement (57, 82, 83) pour actionner le moyen de fermeture (54) de l'état fermé à l'état ouvert en réponse à l'augmentation du niveau de liquide dans la chambre au-dessus du premier niveau prédéterminé.

8. Dispositif de couplage selon la revendication 6 ou 7, **caractérisé en ce qu'**un moyen de poussée est prévu pour pousser le moyen de fermeture (54) à l'état fermé.

9. Dispositif de couplage selon l'une quelconque des revendications précédentes, **caractérisé en ce que** l'un parmi le au moins un moyen de dérivation comprend un second conduit de dérivation (51) et son entrée de dérivation (53, 59) est fournie par une seconde entrée de dérivation (59) adaptée pour recevoir un tuyau de refoulement de trop-plein (61) s'étendant vers le haut à partir de cette dernière pour faire communiquer le tuyau de refoulement (61) avec le conduit de communication principal (33).

10. Dispositif de couplage selon la revendication 9, **caractérisé en ce que** la seconde entrée de dérivation (59) est adaptée pour mettre en prise, de manière amovible, le tuyau de refoulement (61).

11. Dispositif de couplage selon l'une quelconque des revendications précédentes, **caractérisé en ce que** le dispositif de couplage (6, 71, 81, 91) est adapté pour coupler une valve tourbillonnaire (5) à la sortie (3, 4) de la chambre.

12. Dispositif de couplage selon l'une quelconque des revendications précédentes, **caractérisé en ce que** le dispositif de couplage (6, 71, 81, 91) est formé avec une matière plastique.

13. Dispositif de couplage selon l'une quelconque des revendications précédentes, **caractérisé en ce que** le dispositif de couplage (6, 71, 81, 91) est formé par un processus de moulage rotatif.

14. Combinaison composée d'une valve (5) et d'un dispositif de couplage (6, 71, 81, 91) selon l'une quelconque des revendications précédentes, couplé à la valve (5) avec une sortie (20) de la valve (5) qui communique avec l'entrée en amont (34) jusqu'au conduit de communication principal (33) du dispositif de couplage (6, 71, 81, 91).

15. Chambre ayant une sortie (3, 4) de cette dernière, une valve (5) positionnée dans la chambre, et un dispositif de couplage (6, 71, 81, 91) selon l'une quelconque des revendications 1 à 13, couplant une sortie (20) de la valve (5) à la sortie (3, 4) de la chambre.

16. Chambre selon la revendication 15, **caractérisée en ce qu'**un tuyau de refoulement (61) s'étend vers le haut à partir de l'une de la au moins une entrée de dérivation (53, 59) du dispositif de couplage (6, 71, 81, 91) à un second niveau prédéterminé pour contenir le trop-plein de liquide de la chambre.

17. Système de gestion de l'eau de pluie comprenant une chambre de décharge (2, 70, 80, 90), la chambre de décharge ayant une sortie (3, 4) de cette dernière et une valve (5) positionnée dans la chambre de décharge, et un dispositif de couplage (6, 71, 81, 91) selon l'une quelconque des revendications 1 à 13 couplant une sortie (20) de la valve (5) à la sortie (3, 4) de la chambre de décharge.
